(19) Europäisches Patentamt
European Patent Office
Office européen des brevets

(11) **EP 4 579 461 B1**

(12) **EUROPEAN PATENT SPECIFICATION**

(45) Date of publication and mention
of the grant of the patent:
**29.07.2026 Bulletin 2026/31**

(21) Application number: **24221444.3**

(22) Date of filing: **19.12.2024**

(51) International Patent Classification (IPC):
*G06F 11/07* (2006.01)   *G05B 23/00* (2006.01)

(52) Cooperative Patent Classification (CPC):
**G06F 11/0739; G06F 11/0724; G06F 11/0757;
G06F 11/0772; G06F 11/0775; G06F 11/0781;**
G06F 11/0778; G06F 11/0784

(54) **FAULT HANDLING FOR SYSTEM-ON-CHIP SYSTEMS**

FEHLERHANDHABUNG FÜR SYSTEM-ON-CHIP-SYSTEME

GESTION DE DÉFAILLANCE POUR SYSTÈMES DE SYSTÈME SUR PUCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.12.2023 IN 202341089675**

(43) Date of publication of application:
**02.07.2025 Bulletin 2025/27**

(73) Proprietor: **NXP B.V.**
**5656 AG Eindhoven (NL)**

(72) Inventors:
• **Baca, David**
**5656AG Eindhoven (NL)**

• **Mueller, Marcus**
**5656AG Eindhoven (NL)**
• **Nautiyal, Hemant**
**5656AG Eindhoven (NL)**

(74) Representative: **Schwarzweller, Thomas**
**NXP Semiconductors Germany GmbH**
**Intellectual Property Group**
**Beiersdorfstraße 12**
**22529 Hamburg (DE)**

(56) References cited:
**US-A- 5 740 357**

**Description**

**BACKGROUND OF THE INVENTION**

**Field of the Invention**

The present disclosure is directed in general to automotive safety systems. In one aspect, the present disclosure relates to methods and systems for fault management in system-on-chips (SoCs).

**Description of the Related Art**

Increasing levels of system integration have resulted in more and more processor cores and resources being bundled on a single chip. These processor cores have multiple applications being executed at the same time. With such system designs where multiple applications are integrated on the same chip and working concurrently, there is an increase in the number of faults in the chip. To achieve fault-free operation, it is mandatory to detect and recover from a fault within fault handling time interval. Typically, a fault collection and reaction system is included on the chip to categorize faults and generate appropriate reactions. Existing fault collection and reaction system architectures use a centralized fault collection application to collect and react to faults, which results in a high severity response for each fault irrespective of the application that resulted in the fault. Moreover, the existing fault collection and reaction systems rely on a central core and software to handle faults from all applications. This increases fault handling time and instability in the chip and reduces system availability for other operations. Such centralized fault handling architectures have several disadvantages for the new SoC trends, including loss of fault granularity when complex fault routing is solved by fault aggregation, limited scalability to system-of-systems solutions, and robustness with respect to faults which requires thorough testing.
As seen from the foregoing, the existing fault collection systems are extremely difficult at a practical level by virtue of the challenges with providing fault handling on complex SoC and system of system designs which meet the applicable performance, design, complexity and cost constraints.
US 5740357A describes a generic fault management of a computer system.

**BRIEF DESCRIPTION OF THE DRAWINGS**

The present invention may be understood, and its numerous objects, features and advantages obtained, when the following detailed description of a preferred embodiment is considered in conjunction with the following drawings.

Figure 1 depicts a simplified plan view of a vehicle which employs a zonal controller architecture with multiple zonal gateways connected to a central controller to ensure that various sensors, systems, controllers, and communications systems are performing safely and reliably.
Figure 2 depicts a simplified block diagram of a Group of Execution Environments (GEENV), where each Execution Environment (EENV) is a collection of hardware resources that together have the capability to perform certain functionality including software execution.
Figure 3 depicts a simplified block diagram of a Group of GEENVs having a plurality of sub-GEENVs managed by a managing EENV (MEENV), where each sub-GEENV has its own managing EENV (MEENV) for managing a plurality of EENVs.
Figure 4 depicts a simplified architectural block diagram of a System-on-Chip (SoC) having a plurality of subsystems arranged in a physical floor plan which includes one or more fault collection units on each subsystem.
Figure 5 depicts a schematic block diagram of a fault collection unit with inputs and outputs for collecting and reacting to faults in accordance with selected embodiments of the present disclosure.
Figure 6 depicts a schematic block diagram of a plurality of fault collection units connected in a daisy-chain configuration to collect and monitor faults in accordance with selected embodiments of the present disclosure.
Figure 7 depicts a schematic block diagram of a plurality of fault collection units connected in an escalation tree configuration for collecting, monitoring, and escalating faults in accordance with selected embodiments of the present disclosure.

**DETAILED DESCRIPTION**

A fault handling apparatus, system, method, and program code are described for System(s) on Chip (SoC) systems where each SoC subsystem includes one or more fault collection hardware units which are deployed and connected to one another to form fault handling schemas that provide a fault-tolerant architecture for an arbitrary depth of hierarchy and an arbitrary number of faults originating in the SoC system. In selected embodiments, the fault collection hardware units are connected with a plurality daisy-chain configurations arranged in an escalation tree for comprehensive fault collection and escalation. By using daisy-chained configurations of a single fault collection hardware unit in arbitrary topologies of SoC subsystems, fault collection and monitoring is enabled from distributed components. And by connecting the daisy-chained fault collection hardware unit in an escalation tree configuration, fault collection, monitoring, and escalation is enabled in a hierarchical organization of SoC system hardware resources. The arbitrary hierarchy depth enables efficient safe-stating while keeping the unaffected applications running on the SoC system. The disclosed deployment topologies scale well to the future complex SoC architectures supporting both distributed and hierarchical organization of SoC system hardware resources.

In selected embodiments, the disclosed fault handling system provides fail-safe fault handling in SoCs implementing system of systems while keeping available as much of the SoC as possible, thereby ensuring functional safety for the SoC while safe-stating or shutting down only the affected subset resources. In addition, the disclosed fault handling system guarantees reaching a safe state in a fault tolerant manner.

At the core of the disclosed fault handling system is a fault collection unit (FCU) which is a dedicated IP design which collects, monitors, and escalates faults as needed. Each FCU is connected to receive fault inputs (for collecting faults) and an overflow input (for further connectivity). The FCU generates escalation fault outputs, including an overflow output and local control outputs that can be configured as needed. Both fault inputs and the escalation fault output have associated signals for Execution Environment (EENV) IDs to instruct escalation reactions toward the resource-owning EENVs. EIDs are associated with fault inputs, either dynamically by the EID inputs or statically, where the EID is configured within FCU. The overflow output signals that the FCU is registering too many faults than it can handle.

As disclosed herein, FCUs can be connected in different topologies to implement fault collection and fault escalation. Fault collection in a subsystem can be achieved by a single FCU or by multiple FCUs connected in a daisy chain. Fault escalation can be achieved by forming an escalation tree from FCUs. The escalation ensures that a safe state is ultimately reached. Moreover, the escalation process is fault tolerant and thus guarantees that fault handling reaches a safe state event under presence of a single fault during the fault handling process.

Finally, the proposed FCU implementation and its deployment supports SoC architectures in the form of system of systems. The fault collection and escalation supports SoCs with blocks of IPs called subsystems and hosting several virtual ECUs called EENVs. The fault escalation enables grouping of virtual ECUs (vECUs) at multiple levels and therefore scales up well to future SoC/ECU architectures hosting multiple instances of nowadays SOCs and vECU logical grouping into a hierarchical structure.

In summary, the scalability, fault tolerance, and versatility of the disclosed fault handling solution is achieved by FCU features and by the topologies for connecting the FCUs together. Each FCU may be fully configurable to serve either in an escalation tree or in a daisy chain. The topologies can be combined to achieve the desired behavior demonstrated in this report.

To provide a contextual understanding of the disclosed SoC system fault handling apparatus, system, method, and program code, it is helpful to understand the entire effect chain of faults, including errors, failures, and reactions. To this end, the following definitions of fault-related blocks and entities is provided:

A "HW resource" refers to the atomic hardware component in SoC which performs a certain function. A HW resource cannot be further divided into HW resources.

A "HW Subsystem (SSys)" is a group of HW resources that are logically or physically bound together. The logical bond can be the same functionality (e.g., timers) and the physical bond can be the physical connections (e.g., location in SoC, common power supply line). A HW resource can belong to only one subsystem.

A "Managing Subsystem (MSSys)" is a subsystem that can control resources in other subsystems.

An "Execution Environment (EENV)" is a collection of HW resources that together have the capability to perform certain functionality, including software execution. An EENV must be capable of executing an application, and therefore it must contain resources that execute SW, such as cores, memory ranges etc.

A "Group of EENVs (GEENV)" is a group of EENVs. Since a GEENV satisfies the definition of EENV, a GEENV is an EENV. This allows nesting. A GEENV can be a group of GEENVs.

A "Pure EENV" is an EENV that is not GEENV.

A "Managing EENV(MEENV)" is an EENV that is dedicated to managing EENVs within a GEENV. Unlike EENV resource allocation, MEENV resources are predefined; MEENV uses resources in MSSys. All MSSys resources are used by the MEENV and no resource from MSSys can be allocated to other EENV within the group of EENVs managed by MEENV.

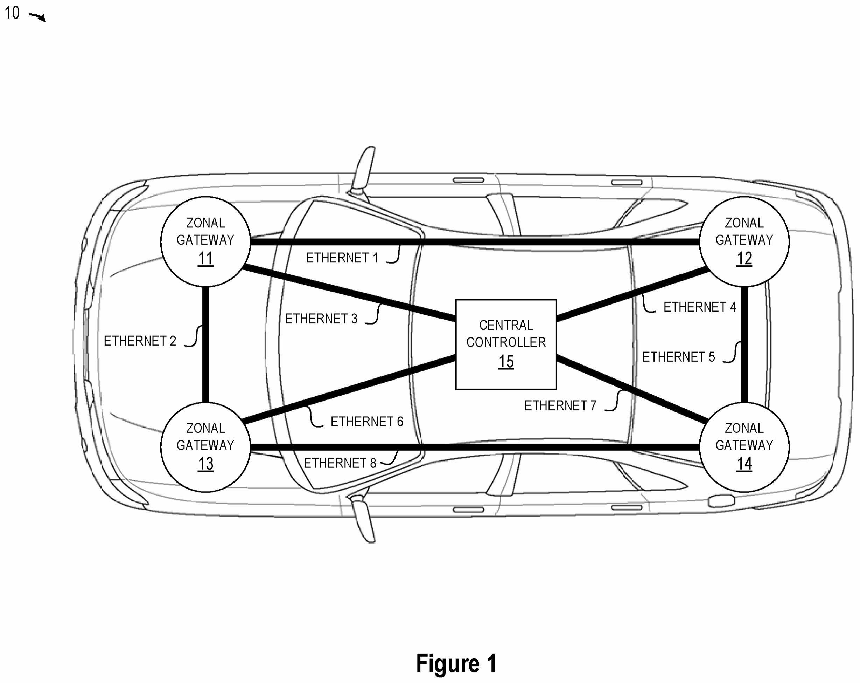

To provide additional details for an improved understanding of selected embodiments of the present disclosure, reference is now made to Figure 1 which depicts a simplified plan view of a vehicle 10 which employs a zonal controller architecture with multiple zonal gateways 11-14 connected to a central controller 15 to ensure that various sensors, systems, controllers, and communications systems are performing safely and reliably. Each zonal gateway or controller (e.g., 11) is a vehicle node that segments the electrical and electronic architecture and serves as a hub for all of the power distribution and data connection requirements for devices - the various sensors, peripherals and actuators - within a physical section or zone of the vehicle 10. In addition, the central controller 15 may be implemented as a vehicle server that optimizes the computational resources by consolidating the number of physical ECUs, reducing H/W components, wiring results in less weight and overall cost reduction. Each zonal gateway 11-14 is connected to the central computing cluster 15 at the heart of the vehicle 10 using a main backbone interface, such as an automotive harness or automotive Ethernet 1-8. As a result, this inter-zonal communication can take place over a small, high-speed networking cable that greatly reduces both the quantity and size of the cables that must be installed around the vehicle.

In the automotive sector, SoC designs increasingly host multiple control applications that were originally developed as independent Electronic Control Units (ECUs). Automotive vendors tend to implement zonal architecture in cars because it saves costs and weight. A zonal architecture requires control functions to be implemented close to the physical function locations. A zonal controller therefore hosts several ECU functions that were previously controlled from independent ECUs.

In order to reduce the likelihood of a harm to humans in the case of a failure, automotive ECUs are subjected to functional safety standards, such as ISO 26262 [ISO11], [ISO18] which is the international functional safety standard for the development of electrical and electronic systems in road vehicles. Under such standards, an ECU that experiences a fault will be brought gracefully to a safe state. Ideally, the safe state should, as much as possible, keep the ECU functionality alive and degrade only the affected function in order for the ECU to be still available. This goal applies also when a zonal controller hosts several ECUs. Both individual ECU availability and also ECU safe-stating independence shall be achieved in order to achieve high ECU availability. Both fault detection and fault reaction shall be designed to achieve this goal.

Hosting several virtual ECUs (vECUs) on a single SoC (and thus on a single physical ECU) poses additional challenges for fault handling. For example, the ISO 26262 standard requires that every ECU reduces the occurrence of dangerous failures to an acceptable level. Faults can be detected by both hardware and software detection mechanisms. The scope of fault effects can be different and thus different need to be the scopes of the respective reactions.

In addition, the design trends for future SoCs is to host complex system of virtual ECUs -- a system of systems. As the number of control functions grows and the dependency on those functions increases with new vehicle designs, the demand for higher availability of those functions increases, even in the presence of faults. This will require higher independence of functions and cascading hierarchy of function groups that ensure only a local or a partial loss of functionality in the case of a failure.

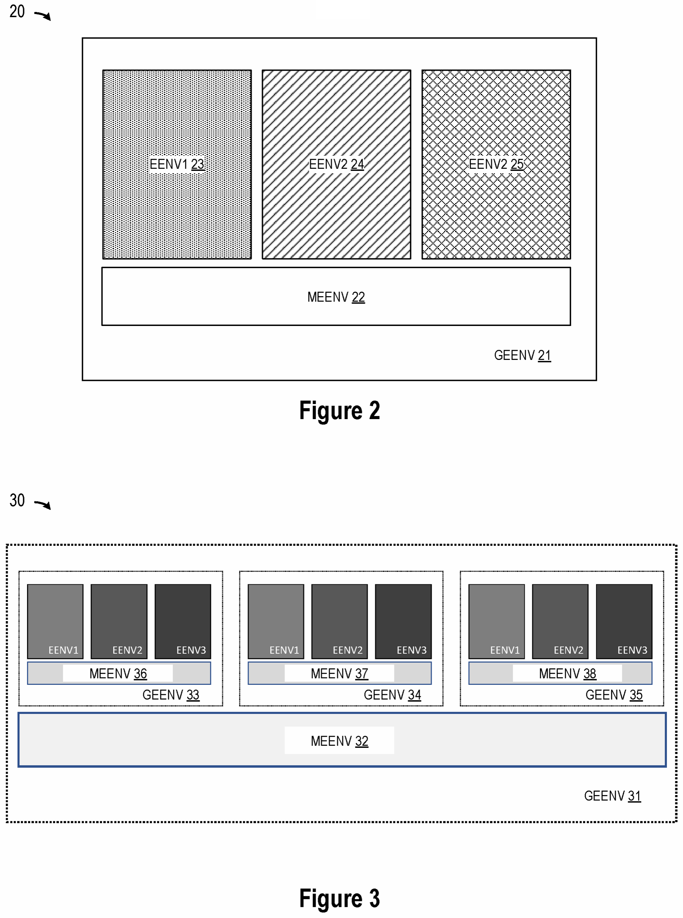

To provide additional details for an improved understanding of selected embodiments of the present disclosure, reference is now made to Figure 2 which depicts a simplified block diagram 20 of an example Group of Execution Environments (GEENV) 21 formed from a plurality of Execution Environment (EENVs) 23-25 and a single MEENV 22. In the depicted example, the GEENV 21 consists of four EENVs -- EENV1, EENV2, EENV3 and MEENV 22, where the MEENV 22 is also an EENV. Each EENV is a collection of hardware resources that together have the capability to perform certain functionality including software execution, and the partitioning of the SoC into EENVs is configurable. In contrast, MEENV resources are predefined in the SoC architecture.

To provide additional details for an improved understanding of selected embodiments of the present disclosure, reference is now made to Figure 3 which depicts a simplified block diagram 30 of a Group of GEENVs 31 having a plurality of sub-GEENVs 33-35 managed by a managing EENV (MEENV) 32. Each sub-GEENV 33-35 has its own MEENV 36-38 for managing a plurality of EENVs (EENV1, EENV2, EENV3). As depicted, each sub-GEENV 33-35 functionally operates as an EENV, but each sub-GEENV 33-35 has its own MEENV, which is a statement that applies to all four GEENVs 31, 33-35. The sub-GEENVs 33-35 have their own MEENVs 36-38, and the GEENV 31 which includes the three sub-GEENVs 33-35 also has its own MEENV 32. Each MEENV 32, 36-38 manages the EENVs that are established at the same abstraction level within the same GEENV.

When an MEENV (e.g., 36) processes events from EEVNs (e.g., EENV1, EENV2, EENV3), it must recognize the origin of any event. Therefore, each EENV is assigned an ID, EENV ID (EID). The EID is interpreted by an MEENV (e.g., 36) of GEENV (e.g., 33) where the corresponding EENV is present at the same abstraction level as the MEENV. That means that the semantics of EID changes at each level. In the example in Figure 3, each GEENV (e.g., 33) consisting of pure EENVs (e.g., EENV1, EENV2, EENV3) has a set of EIDs distinguishing the EENVs. Hence, each GEENV has EIDs {1, 2, 3} corresponding to EENV1, EENV2, and EENV3 in each GEENV, respectively. The higher level GEENV (e.g., 31) that includes the sub-GEENVs 33-35 can have again EIDs {1, 2, 3} corresponding to the three GEENVs in this higher level GEENV.

It is desirable to have faults in the SoC to be responded in the hierarchy of the SoC to contain the fault effect within the smallest group of HW resources to ensure high availability of systems. Since each HW resource can experience a fault, each HW Subsystem (SSys) may contain a fault detection mechanism. Since the EENV is owner of the HW resource, the EENV should respond to such a detected fault, but if the fault cannot be responded to by the EENV, then the fault should be then managed by some higher authority, such as the MEENV of the respective GEENV. Since a GEENV is an EENV, the fault escalation can continue in the hierarchy from EENV to MEENV in the respective GEENV.

HW resources that can be shared among EENVs is designed and integrated for sharing. Otherwise, the HW resource cannot be shared. For example, a HW resource that is spatially shared among EENVs can provide multiple interfaces that are used from different EENVs as the EENV would be the owner of that resource. In this arrangement, each EENV is the owner of the respective interface only, but the EENV perceives the ownership.

In addition or in the alternative, a HW resource may be shared by temporal partitioning which is managed by EENVs or by a shared HW resource that is connected to the temporally shared resource. For instance, a spatially shared resource accesses a storage controller which is used by multiple EENVs via the shared resource and the access is managed by the shared resource that applies time switching to access the controller.

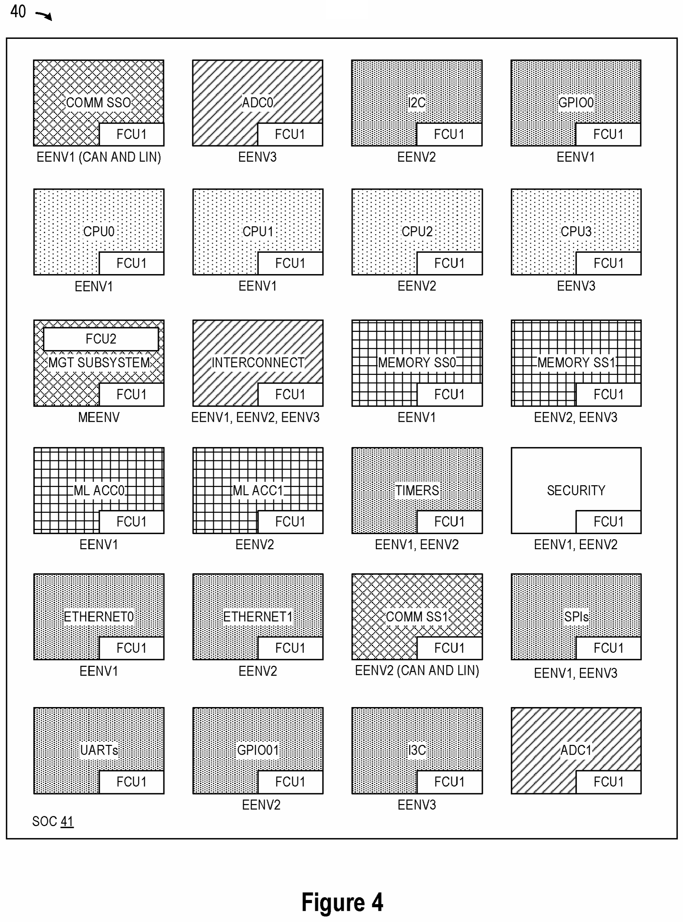

To provide additional details for an improved understanding of selected embodiments of the present disclosure, reference is now made to Figure 4 which depicts a simplified architectural block diagram 40 of a System-on-Chip (SoC) 41 having a plurality of subsystems arranged in a physical floor plan which includes one or more fault collection units on each subsystem. In the depicted example SoC 41, each of the processing unit instances CPU0 - CPU3 may be a subsystem. Each CPU contains cores with supporting HW infrastructure. Where all HW resources in a single CPU are allocated to only a single EENV, the SoC 41 supports up to four EENVs.

The SoC 41 may also include a single instance of an interconnect subsystem which connects bus masters in different subsystems to slaves in subsystems.

The SoC 41 may also include one or more memory subsystems (Memory SS) instances (e.g., Memory SS0, Memory SS1). Each memory subsystem consists of a memory and a memory controller. A memory subsystem is shared among EENVs via the Interconnect subsystem so that every bus master, from its respective EENV, gets its time window to access the memory subsystem.

The SoC 41 may also include one or more communication subsystems (Comm SS) instances (e.g., Comm SS0, Comm SS1). Each communications subsystem contains HW resources for performing CAN, LIN, and FlexRay communication. In the communication subsystem(s), each HW resource is non-shareable.

The SoC 41 may also include one or more Machine Learning Accelerator (ML ACC) instances (e.g., ML ACC1, ML ACC2). Each accelerator subsystem provides two independent interfaces, where each interface can be owned by a different EENV.

The SoC 41 may also include one or more Ethernet instances (Ethernet0, Ethernet1). Each Ethernet subsystem provides two independent interfaces.

The SoC 41 may also include one or more Analog-to-Digital Converter (ADC) instances (e.g., ADC0 and ADC1). Each ADC subsystem can be used by a single EENV only.

The SoC 41 may also include one or more I/O subsystems, such as a GPIO(s) (GPIO0, GPIO1), UART(s), SPI(s), I2C(s), I3C(s), and Timer(s). HW Resources in the I/O subsystems are non-shareable.

The SoC 41 may also include a Security subsystem instance that provides four independent interfaces.

The SoC 41 may also include a single Management Subsystem (MGT Subsystem) instance that contains a core, memory, peripherals, and the necessary infrastructure to run MEENV.

As will be appreciated, the SoC subsystems may use any suitable partitioning to group subsystems with different EENVs (e.g., EENV1, EENV2, EENV3, and MEENV). For example and as indicated with the labeling below each SoC subsystem, a first EENV (EENV1) may include CPU0, CPU1, Interconnect interfaces, Memory SS0, Security interface, ML Acceerator0, Ethernet 0, CAN and LIN from Comm SS0, and some I/O subsystems (e.g., timers, SPI, GPIO0). In addition, a second EENV (EENV2) may include CPU2, Interconnect interfaces, Memory SS1, Security interface, ML Accelerator1, Ethernet1, CAN and LIN from Comm SS1, and some I/O subsystems (e.g., timers, I2C, GPIO1). In addition, a third EENV (EENV3) may include CPU3, Interconnect interface, Memory SS1, ADC0, I3C, and SPI. Finally, a fourth EENV (MEENV) may include the Management Subsystem.

The employment of the architecture in Figure 4 can range from different EENV partitioning to multiple instances of similar SoC architectures in a single package. But as will be appreciated, other partitioning scenarios can be used to group the SoC subsystems to different numbers of EENVs. For instance, there can be four EENVs, each using a single instance of CPU and other allocated SoC HW resources.

Furthermore, two or more instances of this SoC architecture can be integrated into a single SoC forming a system of SoCs. If each SoC has its own linear physical memory space, EENVs that are not GEENVs can own resources from a single SoC only.

Another SoC architecture supporting hierarchical GEENV structure is a tile-based architecture. In such cases, the SoC consists of tiles connected into 2D grid network, where each tile is a full-featured computing system. Resources in tiles can be used to form EENVs. Moreover, a group of tiles can be used to form a GEENV. Furthermore, the GEENV can belong to a supergroup of tiles forming another GEENV - a group of GEENVs, and so on.

Based on the example architecture of an SoC and EENV partitioning in Figure 4, it can be seen that HW resources are logically and physically aggregated in HW subsystems or tiles. A subsystem resources can be instantiated in a confined location or distributed in the SoC elsewhere. In addition, EENVs include HW resources from subsystems in a purely owned or shared manner. An SoC can be instantiated in a single silicon package multiple times, thereby forming a system of SoCs. Similarly, the tile-based architecture can be partitioned and perceived as a group of SoCs in a single package. This SoC aggregation can continue, thereby creating a system of systems architecture in a single package.

Given the variety and complexity of SoC subsystem partitioning possibilities, newer SoC architectures pose challenges for fault handling while simultaneously supporting the demand for higher availability of the vECU control functions under presence of faults. To address these challenges, selected embodiments of the present disclosure introduce a single hardware fault collection unit (FCU) block that is deployed in individual SoC subsystems so that multiple FCUs are connected to one another to form fault handling schemas that provide a fault-tolerant architecture for an arbitrary depth of hierarchy and an arbitrary number of faults originating in the SoC system. In Figure 4, this deployment is conceptually illustrated with each SoC subsystem including at least a first FCU instance (FCU1), each of which is directly or indirectly connected to a second FCU instance (FCU2) to provide a scalable and flexible fault handling architecture that can be easily modified and scaled based on the particular SoC implementation.

At each SoC subsystem, an instance of the first FCU instance (FCU1) reacts to faults and monitors the reactions for their successful completion. For that, detected faults from different HW resources in a subsystem shall be both indicated to the owning EENV and at the same time collected for monitoring. If the pure EENV that owns the failing HW resource cannot handle the fault, the fault must be further escalated to the MEENV (e.g., FCU2) in order to either shut down or safe-state the owning EENV, including all its HW resources, or the containing subsystem must be safe-stated and all affected EENVs informed or even shut down. This escalation can continue through the hierarchy of GEENVs.

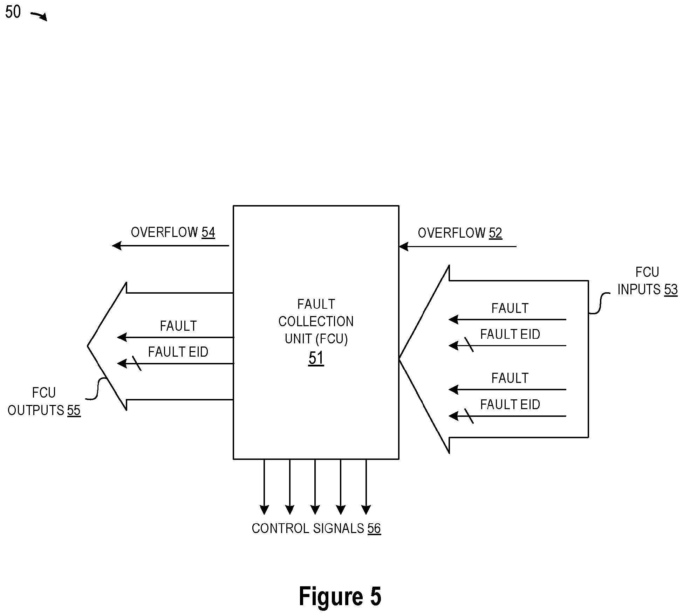

For an improved understanding of selected embodiments of the present disclosure, reference is now made to Figure 5 which depicts a schematic block diagram 50 of a fault collection unit 51 with inputs and outputs for collecting and reacting to faults. In operation, the FCU 51 monitors the fault signals (FAULT) connected to FCU inputs 53, and escalates the faults further on the fault output 55 if needed. The FCU 51 can also generate one or more control signal 56 for local intermediate reactions if needed. As described more fully hereinbelow, the FCU 51 instances can be connected to efficiently collect faults from remote FCU instances of resources in a subsystem, and/or to escalate faults to higher authority in the GEENV hierarchy.

At the FCU 51, each fault input (FAULT) is associated with a fault EENV ID (FAULT EID) which may be a non-negative integer identifying the EENV owning the failing resource. In addition, there may be a special ID associated with each MEENV. For example, the MEENV ID may be zero. The MEENV is also called the Global ID because it means that the fault has a global effect and it does not affect only one EENV. Each EID may be statically configured within the FCU for each fault input, or it is dynamically generated by the SoC subsystem. This behavior is also configurable for each fault input. EID is also generated for the fault escalation output. Fault inputs are either active (to signal a fault) or inactive. Faults can also be signaled by edges, and such inputs need to be configured as edge-based. An activated fault signal becomes inactive if the fault is resolved in the subsystem - the fault signal is either deactivated or cleared for edge-based faults.

In operation, the FCU 51 may monitor active faults to determine if they are deactivated in a timely fashion. To this end, each FCU 51 may contain a timer that measures how long a fault is active. For example, if a count-down timer reaches zero, the fault along with its EID is escalated further via the FCU outputs 55 (Fault, Fault EID). In effect, a fault that is monitored by the FCU timer is configured for delayed escalation. Alternatively, a fault input can be configured for immediate escalation, in which case such a fault is escalated immediately upon fault activation. Finally, the FCU 51 may be configured to generate the overflow signal 54 in response to two or more faults with different EIDs being collected and active in the FCU 51. Hence, the FCU 51 can handle only faults of a single EENV at a time.

In selected embodiments, the FCU 51 can be configured to generate additional generic control signals 56 that may be used for programmable local reactions. While the FCU 51 monitors if a fault is resolved by EENV owning the faulty resource, the FCU 51 does not react to the fault itself, it only escalates. However, the control signals 56 can be used by the FCU 51 when immediate local safe-stating is needed to prevent dangerous events. In such a case, the FCU 51 can serve as the initiator of the local safe-stating, such as by using the control signals 56 to pull on the reset signal of the failing resource. Still, the owning EENV is due to finalize the fault reaction including clearing the fault.

Without belaboring the specific circuit implementations that would be understood by those skilled in the art, the high-level requirements for each FCU instance 51 may include generating an overflow output signal 54 which indicates that two faults with different EIDs are present at the FCU inputs 53 or that an FCU input signal was asserted. In addition, each FCU instance 51 may be connected to receive an overflow input 52 which, when asserted, puts the FCU 51 in an overflow state which results in the assertion of overflow output 54. The overflow status may be cleared by an FCU reset operation or by writing to a register in FCU.

In selected embodiments, the FCU 51 may have a configurable number of fault inputs 53, where each FCU fault input shall have corresponding configurable Fault EID input which is associated only with the FCU fault input. The configurable fault EID may be configured within the FCU 51 or the EID input for the respective fault input is used. Each FCU fault input 53 may be configurable as edge-based or level-based. Level-based inputs have the fault being asserted when fault input is active. Edge-based fault inputs latch the edge and keep the fault asserted until cleared in an FCU register.

In selected embodiments, the FCU 51 may have an FCU output 55 with a fault escalation output that is asserted in the case of escalation. In addition, each FCU escalation output shall have its associated EID output.

Every FCU fault input 53 shall be configurable for an immediate escalation or delayed escalation. For immediate escalation, the fault is immediately escalated to the FCU escalation output, but for delayed escalation, the fault is escalated after a preconfigured time. To this end, the FCU 51 includes a countdown timer that monitors the duration of assertion of faults with the same EID. When the time elapses, FCU 51 triggers escalation with the respective EID, resulting in delayed escalation. However, concurrent faults with different EIDs lead to overflow. The countdown timer is stopped when all FCU fault inputs are de-asserted (deactivated or cleared within FCU 51). All FCU faults have the same EID. It is not possible that EIDs would be different. If they were different, the FCU 51 would have already moved to overflow state.

In addition, the FCU 51 may have logical outputs that can be configured to be asserted to an arbitrary combination of asserted fault inputs and the escalation output.

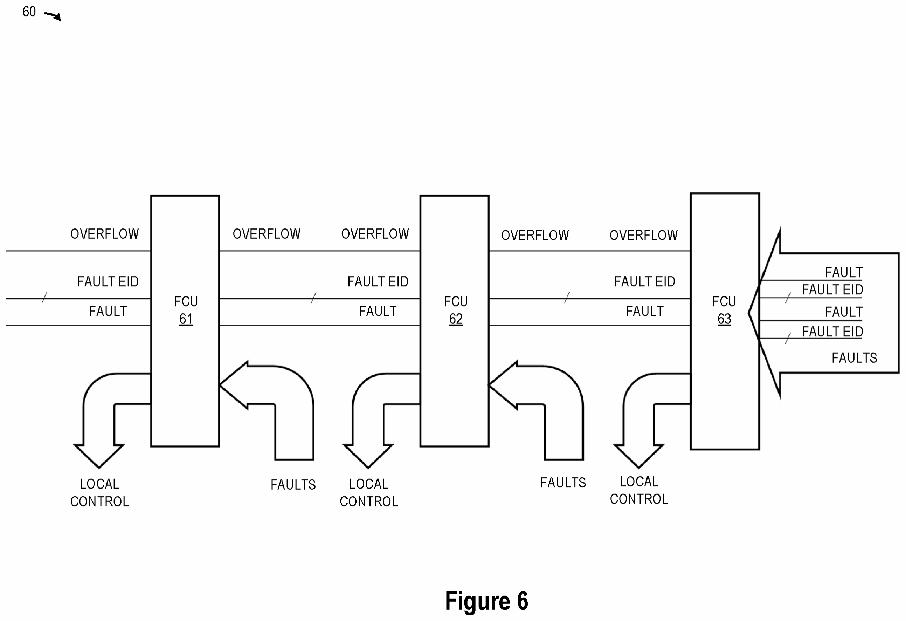

As disclosed herein, multiple instances of the FCU 51 may be deployed across a plurality of SoC subsystems in different SoC architectures to enable fault-tolerant scalable fault collection, fault monitoring, fault escalation, and escalation reaction processing. For example, reference is now made to Figure 6 which depicts a schematic block diagram 60 of a plurality of fault collection units 61-63 connected in a daisy-chain configuration to collect and monitor faults in accordance with selected embodiments of the present disclosure. In the depicted daisy-chain connection, every FCU 61-63 monitors its input signals and sets the output escalation and overflow signals accordingly. Except for the very first FCU 63 in the daisy chain, every FCU (e.g., 62) has one input dedicated to propagate the escalation signals from the previous FCU (e.g., 63). This is achieved by setting the fault input for immediate escalation. Any FCU input can be selected for the propagation of the previous FCU output in the daisy chain. Similarly, the overflow output from each FCU (e.g., 62) is connected to the overflow input of the next FCU (e.g., 61) to propagate the overflow signal in the daisy chain.

The daisy-chain connected FCUs 61-63 can be used to extend the number of faults monitored within a subsystem or to collect faults in a subsystem with sparse HW resources. In the case a subsystem has many different faults detected and each FCU is implemented to provide 64 inputs, the FCU can be daisy-chained to monitor 128, 192, . . . faults.

Furthermore, daisy-chain connected FCUs 61-63 can be used to enable monitoring of multiple faults at the same time. FCU transitions and signals to the overflow state if two inputs with different EIDs are being asserted at the same time. When multiple FCUs are used in a subsystem, concurrent faults with different EIDs asserted at different FCUs do not result in overflow because no two fault indications with different EIDs are present at a single FCU. Hence, the daisy chain extends the number of faults affecting different EENVs that can be concurrently present within the subsystem without an escalation.

In the example in Figure 4, there are I/O subsystems resources (e.g., I2C, I3C, SPI, GPIO0, GPIO1) that are distributed far apart from one another at the boundaries of the SoC package. In this case, the wiring of faults to a single FCU can be reduced when daisy chaining is used to collect faults locally and then connect the local FCU instance to another instance in some other SoC area. Of course, the disadvantage might be a greater die area consumed by multiple FCU instances, so there should be some balancing between the number of FCU instances, the number of FCU inputs, and the effect of long-distance wiring.

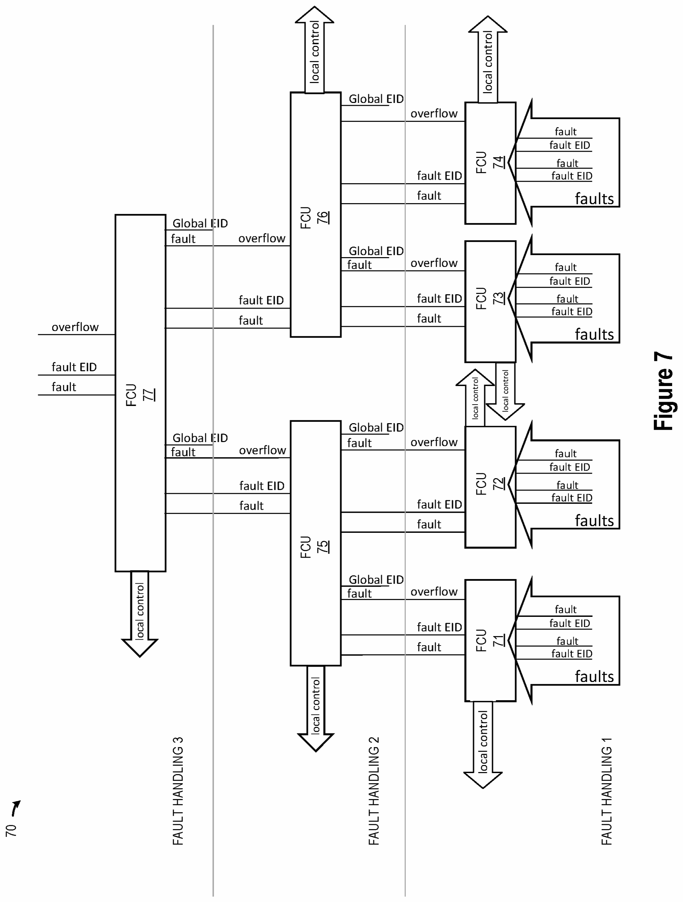

In addition to using daisy-chained FCUs, multiple instances of FCUs may be deployed to collect faults, monitor their resolution, and escalate the fault reaction when required. For example, reference is now made to Figure 7 which depicts a schematic block diagram 70 of a plurality of fault collection units 71-77 connected in an escalation tree configuration to collect, monitor, and escalate faults in accordance with selected embodiments of the present disclosure. In the depicted escalation tree configuration, each FCU 71-77 escalates a non-resolved fault to a higher authority (e.g., to the MEENV of the encompassing GEENV) that can take a coarser reaction to ensure that a safe state is achieved. This escalation can continue forever. At each escalation, the meaning of the Fault EID changes to correspond to EENVs in the GEENV with the MEENV the escalation propagated to. In this way, the fault handling architecture ensures that the fault EID is understood by the MEENV that reacts to the escalation.

As illustrated with reference to the example GEENV 31 shown in Figure 3, the first level of FCUs 71-74 collects faults in HW sub-systems to monitor the EENV fault reactions (e.g., EENV1, EENV2, EENV3). The faults are reported to the owning EENVs via communication means without any FCU involvement - flags, interrupts, messages. These first-level FCUs 71-74 escalate faults to the level-two FCUs 75-76 of the GEENV (e.g., GEENV 33) which includes the pure EENVs (e.g., EENV1, EENV2, EENV3) and a single MEENV 36. The escalation occurs only if the faults are not resolved in time by the owning EENVs. Each level-two FCU (e.g., 75) invokes the MEENV reaction to the escalation. Unlike first-level reactions that are initiated directly within pure EENVs, the level-two escalation reactions are invoked by the level-two FCU.

Next, there can be multiple SoCs in a single package along with the management subsystem MSSys managing those GEENVs. If the GEENV does not manage its fault in time, the fault is escalated to the FCU 77 of the package. As disclosed herein, the Fault EID can change its meaning from being an ID of a pure EENV (e.g., EENV1) to an ID of some subgroups of pure EENVs. This depends on the implemented bit-width of Fault EID and the needs of the architecture. The Fault EID might just simply identify the GEENV from which the escalation is coming from. This can be achieved either by using Global EID or EID of the GEENV. The selected way affects the overflow mechanism. In the case of using Global EID, multiple escalations from different GEENVs will be perceived as an event of a single EID and overflow will not happen. Further escalation will happen only if the respective MEENV does not handle all escalation in time. In the latter case of using different EID for each GEENV, the overflow will happen if two or more GEENVs escalate their faults. Overall, the selected hierarchy implementation is use-case dependent.

With reference to the escalation tree configuration of FCUs 71-77 shown in Figure 7, the first-level FCUs 71-74 in the Fault Handling 1 level monitor the resolution of faults coming from the HW subsystems. In this level, the Fault EID denotes the EENV owning the failing resource. In addition, EID = 0, GlobalID, means a fault that affects multiple EENVs via multiple failing resources in the subsystem. Such a fault is escalated immediately. In the case of escalation, the fault is escalated to the second-level FCU 75, 76 in the Fault Handling 2 level which uses local control signals to invoke a response in MEENV. When the MEENV safe-states the affected resources and interacts with the affected EENVs, this should resolve the faults. If not, a third-level FCU 77 in the Fault Handling 3 level is informed via escalation. In turn, the third-level FCU 77 invokes MEENV, which is at this level managing a set of GEENVs from the Fault Handling 2 level. In this case, the reaction is likely coarser, and the entire GEENV (including its MEENV) must be safe-stated. The escalation can continue further to a Fault Handling 4 level and possibly even higher if such a hierarchy of EENVs exists.

With the disclosed escalation tree configuration of FCUs, a fault monitoring and escalation schema has a fault-tolerant capability because when any fault reaction fails, the escalation ensures reaching a safe state. Stated more generally, consider an escalation tree that includes a first level Fault Handling 1 (FH1) through an nth level Fault Handling $n$ (FH$n$), where $n$ is as integer and $1 \leq n < \infty$. For $n = 1$, a fault of a HW resource is reported to the EENV that owns it and to the FCU. In the case of escalation, the FCU escalation output shall reset or safe-state the entire SoC package. All SoC resources belong to a single EENV and there is no MEENV, so the FCU resets the whole SoC.

In comparison, for $n = 2$, the FCU instance at the second level Fault Handling 2 (FH2) invokes a reaction at the respective MEENV, and if the reaction does not work, then it escalates to a reaction that resets the SoC. The FCUs at FH1 monitor the reactions within pure EENVs and escalate to level-two FCU if needed.

In order to analyze the scenarios of fault handling failure, the reaction failure at $FHx$ is denoted as $FHx\overline{R}$ and the escalation failure is denoted $FHx\overline{E}$. For $n = 1$, the fault handling fails if $FH1\overline{R} \wedge FH1\overline{E}$. $FH1\overline{R}$ is independent of $FH1\overline{E}$ because the reaction invocation involves no FCU. However, the escalation does involve an FCU. As a result, the fault handling achieves fault tolerance for a single fault. If either the reaction or the escalation fails, the system is still safe-stated. If the reaction fails, the fault is not resolved in time, and the escalation safe-states the entire system. And if the escalation has a failure, then the reaction succeeded, and the escalation is not needed anyway. Finally, the reaction and escalation independence means that the faults at FH1 can be considered as Byzantine faults.

For $n = 2$ the fault handling fails if the following condition is satisfied:

i.

$$FH1\overline{R} \wedge (FH1\overline{E} \vee FH2\overline{R} \wedge FH2\overline{E})$$

In turn, this condition can be transformed to:

i.

$$FH1\overline{R} \wedge FH1\overline{E} \vee FH1\overline{R} \wedge FH2\overline{R} \wedge FH2\overline{E}$$

Hence, the fault handling fails if either both the FH1 reaction and the FH1 escalation fail, the conjunction $FH1\overline{R} \wedge FH1\overline{E}$, or in the case when the FH1 reaction fails and also the FH2 reaction and escalation fail, the conjunction $FH1\overline{R} \wedge FH2\overline{R} \wedge FH2\overline{E}$. The latter scenario requires three faults. In this case, the reaction and escalation are assumed to be independent at all FH levels.

The fault handling failure can be generalized in two forms. The first form is recursive. If we let $FHx$ mean the failure of fault handling from FHx up to FHn, this means that a combination of faults in fault handling made the fault reaction and escalation schema fail. We can then write:

a.

$$FHx = FHx\overline{R} \wedge (\overline{FHx\overline{E}} \vee FHx+1)$$

The other form unrolls the recursiveness.

a.

$$\overline{FHn} = \bigvee_{k=1}^{n} \bigwedge_{i=1}^{k} FHi\bar{R} \wedge FHk\bar{E}$$

This formula represents the fault handling failure in the canonical disjunctive normal form. When a conjunction formula evaluates to true, it defines a scenario for fault handling failure. Individual conjunction formulas have the form:

$$FHk\bar{E} \wedge \bigwedge_{i=1}^{k} FHi\bar{R}$$

for $k = 1 \ldots n$. Hence for $k = 1$, two failures are sufficient to make the fault handling fail, namely $FH1\bar{R}$ and $FH1\bar{E}$. As a result, for all conjunction formulas, the number of faults required to make the formula true is $k + 1$. The fewer number of faults is for $k = 1$, where two faults are needed. Since in such a case, the reaction and escalation part are completely independent, the presented fault handling schema has the guaranteed fault tolerance of at least single fault.

    a. The recursive form determines the focus of latent fault tests. Fault handling is a part of safety mechanism and shall be tested for latent faults. Those tests should detect faults that are not detected by any other safety mechanisms and that can together with another fault causes a safety violation. However, ISO26262 considers faults that cause safety violation only together with three or more faults as safe. Hence, the latent faults are rather dual point faults that are not detected by any other safety mechanism. To see those, the recursive form may be rewritten as follows:

    b.

$$\overline{FHx} = FHx\bar{R} \wedge FHx\bar{E} \vee FHx\bar{R} \wedge \overline{FHx+1}$$

The left part ($FHx\bar{R} \wedge FHx\bar{E}$) represents three faults happening at the same time, namely the actual detected fault of safety function, the safety reaction $FHx\bar{R}$ and the safety escalation $FHx\bar{E}$. However, starting from the second level Fault Handling 2, the initiation of the reaction response and the monitoring with escalation is carried out by the same FCU. Thus, there are potential common cause faults to both $FHx\bar{R}$ and $FHx\bar{E}$, and the latent fault tests should primarily address those.
For the sake of completeness, the right part ($FHx\bar{R} \wedge FHx + 1$) has the fault multiplicity at least three because $FHx\bar{R}$ and $FHx + 1$ are implemented by independent HW components. The faults causing together a safety violation are the actual detected fault, the safety reaction $FHx\bar{R}$, and the common cause faults at FHx+1, $FHx + 1\bar{R}$ and $FHx + 1\bar{E}$.
Referring back to Figure 4, the FCU instances may be deployed on the SoC 41 to collect and escalate faults by leveraging both FCU deployment topologies -- daisy chain and escalation tree -- to implement efficient and fault-tolerant fault handling. In particular, each SoC subsystem includes an FCU1 instance at the first level Fault Handling 1. For example, each of the CPU, ML Accelerator, and Ethernet subsystems have their own FCU1 instances. In addition, the Management Subsystem (MGT Subsystem) includes an FCU2 instance as the single FCU instance for responding to escalations at the second level Fault Handling 2. The FCU1 instances monitor the fault resolution which is handled by EENVs that own the IP instances in subsystems. Faults that are known as impossible to be handled by EENVs are set for immediate escalation in order for the second level Fault Handling 2 to shut down the affected EENVs.
To enable fault escalation, each FCU1 instance may be connected directly or indirectly to the FCU2 instance in the Management Subsystem (MGT Subsystem), thereby forming an escalation tree. For example, each FCU1 instance from the CPU subsystems may be directly connected (not shown) to provide a Fault, Fault EID, and overflow signal to the FCU2 instance.
By contrast, the I/O subsystem includes sparse IP instances distributed within the SoC 41, such as a GPIOs, UARTs, SPI, I2C, I3C, and Timer. The corresponding FCU1 instances can be connected in a daisy chain which terminates in a terminating FCU1 instance that is directly connected to the FCU2 instance in the Management Subsystem to propagate any escalation from the I/O subsystem. For example, a first daisy chain may be formed with connections (not shown) between FCU1 instances in the UARTs, GPIO1, I3C, SPIs, and Timers subsystems to terminate in the FCU1 instance of the Timers block. In another example, a second daisy chain may be formed with connections (not shown) between FCU1 instances in the GPIO0 and I2C subsystems to terminate in the FCU1 instance of the I2C block.
In operation, the FCU1 instance in the Management Subsystem monitors the resolution of faults that the MEENV responds to. If the MEENV cannot handle the fault, the fault cannot be escalated to the MEENV. Therefore, escalations from the FCU1 instance of Management Subsystem are set at the FCU2 instance for immediate escalation. Since there is no upper level Fault Handling 3 that would resolve the escalation from the GEENV managed by the MEENV, any escalation from the FCU2 instance leads to the device reset.

As disclosed herein, each of the FCU1s and FCU2 instances may use the same FCU design. The FCU versatility allows the collection of faults in a very flexible manner. In addition, FCU instances are connected either in a daisy chain or in a tree topology where the former enables efficient fault collection and the latter escalation.

A method, system, apparatus, and architecture are provided for monitoring, handling, and escalating faults from a plurality of SoC subsystems by deploying at least one FCU instance at each SoC subsystem, where each FCU instance is configured to monitor one or more fault input signals at one or more fault inputs, to generate a local control signal for one or more hardware resources controlled by the FCU instance, and to escalate any unresolved fault on a fault output, and where a first plurality of FCU instances deployed at a first plurality of SoC subsystems are each connected in a fault escalation tree with an escalation FCU instance deployed at a first management SoC subsystem by connecting the fault outputs from the first plurality of FCU instances to the one or more escalation fault inputs of the escalation FCU instance deployed at the first management SoC subsystem.

By now it should be appreciated that there has been provided a method, architecture, circuit, and system-on-chip for monitoring, handling, and escalating faults from a plurality of SoC subsystems, including a first management SoC subsystem and a first plurality of SoC subsystems connected together on a shared semiconductor substrate. In the disclosed system, a plurality of fault collection unit (FCU) instances is deployed with at least one FCU instance at each SoC subsystem, where each FCU instance is configured to monitor one or more fault input signals at one or more fault inputs, to generate a local control signal for one or more hardware resources controlled by the FCU instance, and to escalate any unresolved fault on a fault output. In this system, a first plurality of FCU instances deployed at the first plurality of SoC subsystems are each connected in a fault escalation tree with an escalation FCU instance deployed at the first management SoC subsystem by connecting the fault outputs from the first plurality of FCU instances to the one or more escalation fault inputs of the escalation FCU instance deployed at the first management SoC subsystem. In the invention, a second plurality of FCU instances deployed at the first plurality of SoC subsystems are connected in a fault collection daisy-chain by connecting the fault output from each FCU instance in the second plurality of FCU instances to a fault input of succeeding FCU instance in the fault collection daisy-chain except for a terminating FCU instance in the fault collection daisy-chain which has a fault output connected to a fault input of the escalation FCU instance deployed at the first management SoC subsystem. In selected embodiments, each FCU instance is further configured to generate an overflow signal at an overflow output of said FCU instance in response to receiving an overflow signal at an overflow input of said FCU instance. In other embodiments, each fault input signal received at a fault input of an FCU instance includes a fault signal and an associated fault execution environment ID (EID) value which identifies a collection of hardware resources that perform a specified software function and that generated the fault signal. In such embodiments, each FCU instance may be configured to generate an overflow signal at an overflow output of said FCU instance if two or more fault input signals having different fault EID values are receiving at the one or more fault inputs of said FCU instance. In selected embodiments, a first fault input signal at a first fault input of a first FCU instance at a first SoC subsystem signals that a first fault is detected at one or more failing hardware resources of the first subsystem. In such embodiments, the first FCU instance may be further configured to monitor the first fault input signal to detect if the first fault was handled by a first execution environment (EENV) which owns the one or more failing hardware resources within a specified time window. In such embodiments, the escalation FCU instance deployed at the first management SoC subsystem may be configured to monitor the one or more escalation fault inputs and to generate a fault escalation signal to a managing execution environment (MEENV) which manages one or more EENVs when the first EENV has not handled the first fault.

In another form, there is provided a fault collection and reaction method, architecture, circuit, and system-on-chip which includes a plurality of SoC subsystems with a plurality of fault collection unit (FCU) instances deployed with at least one FCU instance at each SoC subsystem. In the disclosed method, a first fault signal is generated by one or more hardware resources at a first SoC subsystem in response to a first fault. In addition, the disclosed method provides the first fault signal to a first FCU instance at the first SoC subsystem and to a first execution environment (EENV) which owns the one or more failing hardware resources at the first SoC subsystem. In addition, the disclosed method monitors, at a first fault input of the first FCU instance, the first fault signal to detect if the first EENV handles the first fault within a specified fault handling time interval. In addition, the disclosed method generates, by the first FCU instance, a first fault output signal if the first FCU instance detects that the first EENV does not handle the first fault within the specified fault handling time interval. In addition, the disclosed method provides, over a first fault output of the first FCU instance, the first fault output signal to a second FCU instance at one of the plurality of SoC subsystems. In selected embodiments, the second FCU instance is an escalation FCU instance that is connected in a fault escalation tree with the first FCU instance, and where first fault output signal generated by the first FCU instance is provided to the escalation FCU instance that is deployed at a first management SoC subsystem for the plurality of SoC subsystems. In other selected embodiments, the first fault output signal generated by the first FCU instance is provided to a second FCU instance at a second SoC subsystem connected in a daisy-chain with the first FCU instance to collect and monitor faults from the first and second SoC subsystems. In selected embodiments, the disclosed method generates, by the first FCU instance, an overflow signal at an overflow output of the first FCU instance in response to receiving an overflow signal at an overflow input of the first FCU instance. In other selected embodiments, the first FCU instance is connected and configured to monitor a plurality of fault signals at a plurality of fault inputs, to generate a local control signal for one or more hardware resources controlled by the first FCU instance, and to escalate any unresolved fault on the first fault output. In such embodiments, each fault signal received at a fault input of the first FCU instance may include a fault signal and an associated fault execution environment ID (EID) value which identifies a collection of hardware resources that perform a specified software function and that generated the fault signal. In such embodiments, the first FCU instance may be further configured to generate an overflow signal at an overflow output of the first FCU instance if two or more fault signals having different fault EID values are receiving at the plurality of fault inputs of the first FCU instance. In selected embodiments, the escalation FCU instance may also monitor a plurality of fault outputs generated by the first FCU instance and one or more additional FCU instances, and may then generate a fault escalation signal to a managing execution environment (MEENV) which manages one or more execution environments (EENVs) when the first EENV has not handled the first fault.

In yet other embodiments, there is provided a fault collection and handling system, method, architecture, and circuit for a system-on-chip (SoC) which includes a plurality of SoC subsystems. The disclosed fault collection and handling system includes a first plurality of fault collection unit (FCU) instances deployed with at least one FCU instance at each of the plurality of SoC subsystems. In addition, the disclosed fault collection and handling system includes an escalation FCU instance deployed at a first management SoC subsystem. As disclosed, each of the first plurality of FCU instances includes one or more fault inputs and a fault output, and is configured to monitor one or more fault input signals at the one or more fault inputs, to generate a local control signal for one or more hardware resources controlled by the FCU instance, and to generate a fault output signal to escalate any unresolved fault on the fault output. In addition, the first plurality of FCU instances is connected in a fault escalation tree with the escalation FCU instance by connecting the fault outputs from the first plurality of FCU instances to the one or more escalation fault inputs of the escalation FCU instance. In selected embodiments, the disclosed fault collection and handling system may also include a second plurality of FCU instances deployed at the plurality of SoC subsystems, where the second plurality of FCU instances are connected in a fault collection daisy-chain by connecting the fault output from each FCU instance in the second plurality of FCU instances to a fault input of a succeeding FCU instance in the fault collection daisy-chain except for a terminating FCU instance in the fault collection daisy-chain which has a fault output connected to a fault input of the escalation FCU instance deployed at the first management SoC subsystem. In selected embodiments, each of the plurality of FCU instances is further configured to generate an overflow signal at an overflow output of said FCU instance in response to receiving an overflow signal at an overflow input of said FCU instance. In selected embodiments of the disclosed fault collection and handling system, each of the one or more fault input signals may include a fault signal and an associated fault execution environment ID (EID) value which identifies a collection of hardware resources that perform a specified software function and that generated the fault signal. In addition, the fault output signal may include a fault signal and an associated fault execution environment ID (EID) value which identifies a collection of hardware resources that perform a specified software function and that generated the fault signal.

The block diagrams in the Figures illustrate the architecture, functionality, and operation of possible implementations of systems, methods and computer program products according to various embodiments of the present invention. In this regard, each block in the block diagrams may represent a module, segment, or portion of code, which comprises one or more executable instructions for implementing the specified logical function(s). It should also be noted that, in some alternative implementations, the functions noted in the block may occur out or the order noted in the figures. For example, two block shown in succession may, in fact, be executed substantially concurrently, or the blocks may sometimes be executed in the reverse order, depending upon the functionality involved. It will also be noted that each block of the block diagrams, and combinations of blocks in the block diagrams, can be implemented by special purpose hardware-based systems that perform the specified functions or acts, or combinations of special purpose hardware and computer instructions.

While particular embodiments of the present invention have been shown and described, it will be obvious to those skilled in the art that, based upon the teachings herein, that changes and modifications may be made without departing from this invention and its broader aspects. Furthermore, it is to be understood that the invention is solely defined by the appended claims. It will be understood by those with skill in the art that if a specific number of an introduced claim element is intended, such intent will be explicitly recited in the claim, and in the absence of such recitation no such limitation is present. For non-limiting example, as an aid to understanding, the following appended claims contain usage of the introductory phrases "at least one" and "one or more" to introduce claim elements. However, the use of such phrases should not be construed to imply that the introduction of a claim element by the indefinite articles "a" or "an" limits any particular claim containing such introduced claim element to inventions containing only one such element, even when the same claim includes the introductory phrases "one or more" or "at least one" and indefinite articles such as "a" or "an"; the same holds true for the use in the claims of definite articles. As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object-oriented programming language such as Java, Smalltalk, C++ or the like and conventional procedural programming languages, such as the "C" programming language or similar programming languages.

Aspects of the present invention are described hereinabove with reference to block diagrams of methods, apparatus (systems) and computer program products according to embodiments of the invention. It will be understood that each block of the block diagrams, and combinations of blocks in the flowchart illustrations and/or block diagrams, can be implemented by computer program instructions. These computer program instructions may be provided to a processor of a computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. In certain implementations, a system on a chip or SOC may be implemented.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Although the described exemplary embodiments disclosed herein focus on example fault collection and handling system, the present invention is not necessarily limited to the example embodiments illustrate herein. For example, various embodiments of using sound sensors may be applied in any suitable fault handling systems, and not just automotive vehicle systems, and may use additional or fewer circuit components than those specifically set forth. Thus, the particular embodiments disclosed above are illustrative only and should not be taken as limitations upon the present invention, as the invention may be modified and practiced in different but equivalent manners apparent to those skilled in the art having the benefit of the teachings herein.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A System-on-Chip, SoC, (41) comprising:

   a plurality of SoC subsystems comprising a first management SoC subsystem (MGT SUBSYSTEM) and a first plurality of SoC subsystems (CPU0, MEMORY SS0, COMM SS1) connected together on a shared semiconductor substrate; and
   a plurality of fault collection unit, FCU, instances (FCU1, FCU2, 51) deployed with at least one FCU instance at each SoC subsystem (CPU0, MEMORY SS0, COMM SS1), where each FCU instance is configured to monitor one or more fault input signals at one or more fault inputs (53), to generate a local control signal (56) for one or more hardware resources controlled by the FCU instance, and to escalate any unresolved fault on a fault output (55),
   where a first plurality of FCU instances (70) deployed at the first plurality of SoC subsystems(CPU0, MEMORY SS0, COMM SS1) are each connected in a fault escalation tree with an escalation FCU instance deployed at the first management SoC subsystem by connecting the fault outputs (55) from the first plurality of FCU instances to the one or more escalation fault inputs of the escalation FCU instance (FCU2) deployed at the first management SoC subsystem (MGT SUBSYSTEM);

where a second plurality of FCU instances deployed at the first plurality of SoC subsystems are connected in a fault collection daisy-chain (60) by connecting the fault output from each FCU instance in the second plurality of FCU instances to a fault input of succeeding FCU instance in the fault collection daisy-chain except for a terminating FCU instance in the fault collection daisy-chain which has a fault output connected to a fault input of the escalation FCU instance (FCU2) deployed at the first management SoC subsystem.

2. The SoC (40) of claim 1, where each FCU instance (51) is further configured to generate an overflow signal at an overflow output (54) of said FCU instance in response to receiving an overflow signal at an overflow input (52) of said FCU instance.

3. The SoC (40) of any preceding claim, where each fault input signal received at a fault input of an FCU instance comprises a fault signal (FAULT) and an associated fault execution environment ID ,EID, value (FAULT EID) which identifies a collection of hardware resources that perform a specified software function and that generated the fault signal.

4. The SoC (40) of claim 3, where each FCU instance is further configured to generate an overflow signal at an overflow output (54) of said FCU instance if two or more fault input signals having different fault EID (FAULT EID) values are receiving at the one or more fault inputs of said FCU instance.

5. The SoC (40) of any preceding claim, where a first fault input signal at a first fault input of a first FCU instance at a first SoC subsystem signals that a first fault is detected at one or more failing hardware resources of the first subsystem.

6. The SoC (40) of claim 5, where the first FCU instance is further configured to monitor the first fault input signal to detect if the first fault was handled by a first execution environment ,EENV, which owns the one or more failing hardware resources within a specified time window.

7. The SoC of claim 6, where the escalation FCU instance (FCU2) deployed at the first management SoC subsystem is configured to monitor the one or more escalation fault inputs and to generate a fault escalation signal to a managing execution environment, MEENV, which manages one or more EENVs when the first EENV has not handled the first fault.

**Patentansprüche**

1. System auf einem Chip, SoC (41), das Folgendes umfasst:

eine Vielzahl von SoC-Subsystemen, die ein erstes Management-SoC-Subsystem (MGT-SUBSYSTEM) und mehrere erste SoC-Subsysteme (CPU0, SPEICHER SS0, COMM SS1) umfasst, die auf einem gemeinsam genutzten Halbleitersubstrat miteinander verbunden sind; und

eine Vielzahl von Instanzen der Fehlererfassungsinstanzen, FCU-Instanzen (FCU1, FCU2, 51), die mit mindestens einer FCU-Instanz an jedem SoC-Subsystem (CPU0, SPEICHER SS0, COMM SS1) eingesetzt werden, wobei jede FCU-Instanz dazu ausgelegt ist, ein oder mehrere Fehlereingangssignale an einem oder mehreren Fehlereingängen (53) zu überwachen, um ein lokales Steuersignal (56) für eine oder mehrere HardwareRessourcen zu erzeugen, die durch die FCU-Instanz gesteuert werden, und um jeden ungelösten Fehler an einen Fehlerausgang (55) zu eskalieren,

wobei eine erste Vielzahl von FCU-Instanzen (70), die an der ersten Vielzahl von SoC-Subsystemen (CPU0, SPEICHER SS0, COMM SS1) eingesetzt werden, jeweils in einem Fehlereskalationsbaum mit einer Eskalations-FCU-Instanz verbunden sind, die an dem ersten Management-SoC-Subsystem eingesetzt wird, indem die Fehlerausgänge (55) der ersten Vielzahl von FCU-Instanzen mit einem oder mehreren Eskalationsfehlereingängen der Eskalations-FCU-Instanz (FCU2) verbunden werden, die im ersten Management-SoC-Subsystem (MGT SUBSYSTEM) eingesetzt ist;

wobei eine zweite Vielzahl von FCU-Instanzen, die an der ersten Vielzahl von SoC-Subsystemen eingesetzt werden, in einer Fehlersammlungs-Daisy-Kette (60) verbunden sind, indem die Fehlerausgabe von jeder FCU-Instanz in der zweiten Vielzahl von FCU-Instanzen mit einer Fehlereingabe einer nachfolgenden FCU-Instanz in der Fehlersammlungs-Daisy-Kette verbunden wird, mit Ausnahme einer abschließenden FCU-Instanz in der Fehlersammlungs-Daisy-Kette, die eine Fehlerausgabe aufweist, die mit einer Fehlereingabe der Eskalations-FCU-Instanz (FCU2) verbunden ist, die im ersten Management-SoC-Subsystem eingesetzt wird.

**2.** SoC (40) nach Anspruch 1, wobei jede FCU-Instanz (51) ferner dazu ausgelegt ist, ein Überlaufsignal an einem Überlaufausgang (54) der FCU-Instanz als Reaktion auf das Empfangen eines Überlaufsignals an einem Überlaufeingang (52) der FCU-Instanz zu erzeugen.

**3.** SoC (40) nach einem der vorhergehenden Ansprüche, wobei jedes Fehlereingangssignal, das an einem Fehlereingang einer FCU-Instanz empfangen wird, ein Fehlersignal (FAULT) und einen assoziierten Fehlerausführungsumgebungs-ID-, EID-, Wert (FAULT EID) umfasst, der eine Sammlung von Hardwareressourcen identifiziert, die eine spezifizierte Softwarefunktion durchführen und die das Fehlersignal erzeugt haben.

**4.** SoC (40) nach Anspruch 3, wobei jede FCU-Instanz ferner dazu ausgelegt ist, ein Überlaufsignal an einem Überlaufausgang (54) der FCU-Instanz zu erzeugen, wenn zwei oder mehr Fehlereingangssignale mit unterschiedlichen Fehler-EID (FAULT-EID)-Werten an dem einen oder mehreren Fehlereingängen der FCU-Instanz empfangen werden.

**5.** SoC (40) nach einem der vorhergehenden Ansprüche, wobei ein erstes Fehlereingangssignal an einem ersten Fehlereingang einer ersten FCU-Instanz an einem ersten SoC-Subsystem signalisiert, dass ein erster Fehler an einer oder mehreren fehlerhaften Hardwareressourcen des ersten Subsystems detektiert wird.

**6.** SoC (40) nach Anspruch 5, wobei die erste FCU-Instanz ferner dazu ausgelegt ist, das erste Fehlereingangssignal zu überwachen, um zu detektieren, ob der erste Fehler durch eine erste Ausführungsumgebung, EENV, gehandhabt wurde, die die eine oder mehrere fehlerhafte Hardwareressourcen innerhalb eines spezifizierten Zeitfensters besitzt.

**7.** SoC nach Anspruch 6, wobei die Eskalations-FCU-Instanz (FCU2), die an dem ersten Verwaltungs-SoC-Subsystem eingesetzt wird, dazu ausgelegt ist, die eine oder mehrere Eskalationsfehlereingaben zu überwachen und ein Fehlereskalationssignal an eine Verwaltungs-Ausführungsumgebung, MEENV, zu erzeugen, die eine oder mehrere EENVs verwaltet, wenn die erste EENV den ersten Fehler nicht gehandhabt hat.

**Revendications**

**1.** Système sur puce, SoC, (41) comprenant :

une pluralité de sous-systèmes SoC comprenant un premier sous-système SoC de gestion (SOUS-SYSTÈME MGT) et une première pluralité de sous-systèmes SoC (CPU0, MÉMOIRE SS0, COMM SS1) connectés ensemble sur un substrat semiconducteur partagé ; et
une pluralité d'instances (FCU1, FCU2, 51) d'unité de collecte d'incidents, FCU, déployées avec au moins une instance FCU au niveau de chaque sous-système SoC (CPU0, MÉMOIRE SS0, COMM SS1), chaque instance FCU étant configurée pour surveiller un ou plusieurs signaux d'entrée d'incidents au niveau d'une ou plusieurs entrées d'incidents (53), pour générer un signal de commande local (56) pour une ou plusieurs ressources matérielles contrôlées par l'instance FCU, et pour faire remonter tout incident non résolu sur une sortie d'incident (55), une première pluralité d'instances FCU (70) déployées au niveau de la première pluralité de sous-systèmes SoC (CPU0, MÉMOIRE SS0, COMM SS1) étant chacune connectées dans un arbre d'escalade d'incidents avec une instance FCU d'escalade déployée au niveau du premier sous-système SoC de gestion en connectant les sorties d'incidents (55) de la première pluralité d'instances FCU aux une ou plusieurs entrées d'incidents d'escalade de l'instance FCU (FCU2) déployée au niveau du premier sous-système SoC de gestion (SOUS-SYSTÈME MGT) ;
une seconde pluralité d'instances FCU déployées au niveau de la première pluralité de sous-systèmes SoC étant connectées dans une guirlande de collecte d'incidents (60) en connectant la sortie d'incident de chaque instance FCU de la seconde pluralité d'instances FCU à une entrée d'incident de l'instance FCU suivante dans la guirlande de collecte d'incidents, à l'exception d'une instance FCU terminale dans la guirlande de collecte d'incidents qui a une sortie d'incident connectée à une entrée d'incident de l'instance FCU d'escalade (FCU2) déployée au niveau du premier sous-système SoC de gestion.

**2.** SoC (40) selon la revendication 1, dans lequel chaque instance FCU (51) est en outre configurée pour générer un signal de débordement à une sortie de débordement (54) de ladite instance FCU en réponse à la réception d'un signal de débordement à une entrée de débordement (52) de ladite instance FCU.

**3.** SoC (40) selon l'une quelconque des revendications précédentes, dans lequel chaque signal d'entrée d'incident reçu à une entrée d'incident d'une instance FCU comprend un signal d'incident (FAULT) et une valeur ID d'environnement d'exécution d'incident, EID, associée (FAULT EID) qui identifie une collection de ressources matérielles qui exécutent une fonction logicielle spécifiée et qui ont généré le signal d'incident.

4. SoC (40) selon la revendication 3, dans lequel chaque instance FCU est en outre configurée pour générer un signal de débordement au niveau d'une sortie de débordement (54) de ladite instance FCU si deux signaux d'entrée d'incident, ou plus, ayant des valeurs EID d'incident différentes (FAULT EID), sont reçus au niveau des une ou plusieurs entrées d'incident de ladite instance FCU.

5. SoC (40) selon l'une quelconque des revendications précédentes, dans lequel un premier signal d'entrée d'incident au niveau d'une première entrée d'incident d'une première instance FCU au niveau d'un premier sous-système SoC signale qu'un premier incident est détecté au niveau d'une ou plusieurs ressources matérielles défaillantes du premier sous-système.

6. SoC (40) selon la revendication 5, dans lequel la première instance FCU est en outre configurée pour surveiller le premier signal d'entrée d'incident pour détecter si le premier incident a été traité par un premier environnement d'exécution, EENV, qui possède les une ou plusieurs ressources matérielles défaillantes dans une fenêtre de temps spécifiée.

7. SoC selon la revendication 6, dans lequel l'instance FCU d'escalade (FCU2) déployée au niveau du premier sous-système SoC de gestion est configurée pour surveiller les une ou plusieurs entrées d'incidents d'escalade et pour générer un signal d'escalade d'incidents vers un environnement d'exécution de gestion, MEENV, qui gère un ou plusieurs EENV lorsque le premier EENV n'a pas traité le premier incident.

Figure 1

ZONAL GATEWAY 12

ZONAL GATEWAY 14

ZONAL GATEWAY 11

ZONAL GATEWAY 13

CENTRAL CONTROLLER 15

ETHERNET 1
ETHERNET 2
ETHERNET 3
ETHERNET 4
ETHERNET 5
ETHERNET 6
ETHERNET 7
ETHERNET 8

10

20

EENV1 23    EENV2 24    EENV2 25

MEENV 22

GEENV 21

**Figure 2**

30

EENV1 EENV2 EENV3    EENV1 EENV2 EENV3    EENV1 EENV2 EENV3

MEENV 36    MEENV 37    MEENV 38

GEENV 33    GEENV 34    GEENV 35

MEENV 32

GEENV 31

**Figure 3**

40 ⤵

| COMM SS0 | | ADC0 | | I2C | | GPIO0 | |
|---|---|---|---|---|---|---|---|
| | FCU1 | | FCU1 | | FCU1 | | FCU1 |
| EENV1 (CAN AND LIN) | | EENV3 | | EENV2 | | EENV1 | |

| CPU0 | | CPU1 | | CPU2 | | CPU3 | |
|---|---|---|---|---|---|---|---|
| | FCU1 | | FCU1 | | FCU1 | | FCU1 |
| EENV1 | | EENV1 | | EENV2 | | EENV3 | |

| FCU2 | | INTERCONNECT | | MEMORY SS0 | | MEMORY SS1 | |
|---|---|---|---|---|---|---|---|
| MGT SUBSYSTEM | | | | | | | |
| | FCU1 | | FCU1 | | FCU1 | | FCU1 |
| MEENV | | EENV1, EENV2, EENV3 | | EENV1 | | EENV2, EENV3 | |

| ML ACC0 | | ML ACC1 | | TIMERS | | SECURITY | |
|---|---|---|---|---|---|---|---|
| | FCU1 | | FCU1 | | FCU1 | | FCU1 |
| EENV1 | | EENV2 | | EENV1, EENV2 | | EENV1, EENV2 | |

| ETHERNET0 | | ETHERNET1 | | COMM SS1 | | SPIs | |
|---|---|---|---|---|---|---|---|
| | FCU1 | | FCU1 | | FCU1 | | FCU1 |
| EENV1 | | EENV2 | | EENV2 (CAN AND LIN) | | EENV1, EENV3 | |

| UARTs | | GPIO01 | | I3C | | ADC1 | |
|---|---|---|---|---|---|---|---|
| | FCU1 | | FCU1 | | FCU1 | | FCU1 |
| | | EENV2 | | EENV3 | | | |

SOC 41

# Figure 4

50

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5740357 A